# EUROPÄISCHE PATENTSCHRIFT

(11) **EP 1 534 574 B1**
(45) Veröffentlichungstag und Bekanntmachung des Hinweises auf die Patenterteilung: **04.01.2006**
(21) Anmeldenummer: 03798874.8
(22) Anmeldetag: 06.08.2003
(51) Int. Cl.: B62B 5/00, B62D 51/02, B62D 51/04

(54) **TROLLEY MIT EINEM MOTORISCH ANTREIBBAREN LAUFWERK**
CART COMPRISING A MOTORISED DRIVE MECHANISM
CHARIOT A MECANISME D'ENTRAINEMENT MOTORISE

(30) Priorität: 04.09.2002 DE 10240846
(43) Veröffentlichungstag der Anmeldung: 01.06.2005
(73) Patentinhaber: Lang, Emil, 97342 Obernbreit (DE)
(72) Erfinder: Lang, Emil, 97342 Obernbreit (DE)
(74) Vertreter: Liesegang, Roland
(86) Internationale Anmeldenummer: PCT/EP2003/008712
(87) Internationale Veröffentlichungsnummer: WO 2004/031016

(56) Entgegenhaltungen:
- DE-U- 29 917 985
- FR-A- 2 731 670
- GB-A- 2 242 404
- US-A- 3 583 510
- US-A- 4 538 695
- US-A- 4 874 055
- US-B1- 6 390 216
- US-B1- 6 446 742
- US-B1- 6 474 427
- "RESINS STRENGTHEN GOLF-BAG CARRIER" MACHINE DESIGN, PENTON,INC. CLEVELAND, US, Bd. 62, Nr. 18, 6. September 1990 (1990-09-06), Seite 80 XP000106890 ISSN: 0024-9114

## Beschreibung

Die Erfindung betrifft einen Trolley mit den Merkmalen des Oberbegriffs des Anspruchs 1, insbesondere zur Anwendung beim Golfsport, aber auch zur Nutzung für andere Zwecke, wie das Einlkaufen, die Nutzung zum Befördern kleinerer Lasten in Fußgängerzonen, Bahnhöfen, Altenversorgungseinrichtungen oder dergleichen.

Herkömmliche Trolleys der im Oberbegriff des Anspruchs 1 genannten Art haben ein oder zwei lenkbare Vorderräder und elektromotorisch angetriebene Hinterräder, einen zwischen Vorder- und Hinterrädern angeordneten Fahrerplatz, und einen hinter den Hinterrädern angeordneten Platz zum Abstellen und Halten eines oder zweier Golfschlägersäcke.

Der Erfindung liegt die Aufgabe zugrunde, einen Trolley der im Oberbegriff des Anspruchs 1 genannten Art zu schaffen, den der Nutzer vielseitig, nämlich mitfahrend und mitgehend, bequem nutzen und selbst transportieren kann.

FR 2 731 670 betrifft einen Trolley, der eine Halteeinrichtung für ein Golfbag aufweist, die vor dem Fahrerplatz angeordnet ist, wobei der Fahrerplatz für einen Nutzer von hinten oder von beiden Seiten frei zugänglich ist. Eine Lenkstange ist aus einer vertikalen Position in eine geneigte Position verschwenkbar.

Aus der US 6,139,032 ist ein Trolley mit einer starren Sitzstruktur für einen Nutzer bekannt. WO 90/14866 betrifft einen Trolley mit einer Halteeinrichtung für ein Golfbag.

Zur Lösung dieser Aufgabe dienen die Merkmale des Anspruchs 1.

Vorteilhafte Ausgestaltungen der Erfindung sind in den Unteransprüchen angegeben.

Ein Trolley gemäß der Erfindung hat die folgenden Vorteile:
1. Aufgrund des geringen Gewichtes der in Leichtbauweise ausgeführten modulartigen steck- und/oder faltbaren Bauteile und der Möglichkeit, den Trolley mit wenigen Handgriffen zusanunenzuklappen und wiederaufzubauen, kann dieser in einem Reisekoffer üblicher Innenmasse verstaut bzw. im Kofferraum eines Pkw untergebracht werden.
2. Der Nutzer kann hinter dem Trolley herlaufen und dabei über die Haltedeichsel daran angebrachte Steuereinrichtungen für die Geschwindigkeit und die Fahrtrichtung bequem betätigen.
3. Durch Schwenken der Haltedeichsel einschließlich des Gepäcksackes nach vorne wird der Fahrerplatz frei, so daß der Nutzer von hinten oder von beiden Seiten auf den Fahrerplatz aufsteigen und mitfahren kann.
4. Ein Mitfahren ist auch sitzend nach Anbringen eines vorzugsweise gefederten Sitzes möglich.
5. An der Haltedeichsel kann ein Kartenhalter, insbesondere ein Scorekartenhalter für das Golfspiel, sowie ein Halter für einen Schirm als Wetterschutz angebracht sein. Die Halteeinrichtung kann für die Halterung von ein oder zwei Gepäcksäcken, insbesondere Golfsäcken ausgelegt sein.
6. Durch Ausführen des Laufwerkes mit Vollgummirädern oder Luftreifen oder alternativ mit beidseitig um je zwei Radpaare geschlungen Laufgurten oder Ketten aus gummielastischem Werkstoff ist die Belastung des Untergrundes kleiner als diejenige durch eine zu Fuß gehende Person.
7. Die Achsaufhängung von Stegplatten des Laufwerkes mittels axial fluchtender Steckachsen in Lagerklötzen zwischen den Rädern ermöglicht eine unabhängige Bewegung der beiden seitlichen Laufwerke auf den beiden Seiten des Trolleys auf und ab, so daß Bodenwellen oder Unebenheiten aufgenommen werden, ohne daß der Fahrerplatz unangenehm großen Bewegungen ausgesetzt wird.
8. Durch ein Gelenk zwischen dem vorderen Ende der Grundplatte und dem Vorbau zur Abstützung des Vorderrades werden Unebenheiten des Untergrundes abgefedert und somit Erschütterungen weitgehend vermieden.
9. Für einen Elektroantrieb kann ein handelsüblicher, batteriebetriebener 12-Volt-Elektromotor mit angekuppeltem Differentialgetriebe eingesetzt werden. Im Falle des Laufgurt- bzw. Kettentriebes können zwei unabhängig voneinander betreibbare drehrichtungsumkehrbare Elektromotoren zum jeweiligen Antrieb eines Laufgurtes eingesetzt werden, was eine Lenkbarkeit des Vorderrades erübrigt. Der Antrieb durch zwei Elektromotoren kann auch bei Übertragung der Antriebsleistung auf den Untergrund durch Räder sinnvoll sein. Es können in diesem Fall auch in die angetriebenen Räder eingebaute Radmotoren eingesetzt werden.
10. Die Elektromotoren können mit Motorbremsen ausgerüstet sein, so daß bei Zurücknahme der Stromzufuhr die Motorbremse betätigt wird. Zusätzlich ist eine beispielsweise durch ein Fußpedal betätigbare mechanische Feststellbremse vorgesehen, die vorzugsweise zwei Schellenbremsen für die nicht angetriebenen Hinterräder aufweist.
   Bei Betätigung der Feststellbremse kann die Stromzufuhr automatisch unterbrochen und erst beim Lösen der Feststellbremse wieder eingeschaltet werden.
11. Der Trolley entfaltet seine Vorzüge in besonderer Weise beim Einsatz im Golfspiel.

Anstatt durch einen oder zwei Elektromotoren kann der Trolley auch durch jeden anderen geeigneten Antrieb, zum Beispiel einen klein bauenden, geräuscharm ausgebildeten Otto- oder Dieselmotor angetrieben werden.

Die Erfindung ist im folgenden anhand schematischer Zeichnungen näher erläutert. Es zeigen:
- Figur 1: eine Seitenansicht eines Trolleys gemäß der Erfindung in einer ersten Nutzer-Situation;
- Figur 2: eine Seitenansicht wie Figur 1 in einer zweiten Nutzer-Situation;
- Figur 3: eine Seitenansicht wie Figur 1 und 2 eines abgewandelten Trolleys in einer dritten Nutzer-Situation;
- Figur 4: eine perspektivische Ansicht in größerem Maßstab des Trolleys in der Nutzer-Situation nach Figur 1;
- Figur 5: eine perspektivische Ansicht wie Figur 4 des Trolleys in der Nutzer-Situation nach Figur 2;
- Figur 6: eine perspektivische Ansicht wie Figur 4 und 5 des abgewandelten Trolleys in der Nutzer-Situation nach Figur 3;

- Figur 7: eine perspektivische Ansicht des Trolleys nach Figur 4 mit weggelassenem Golfschlägersack;
- Figur 8: eine perspektivische Ansicht des Trolleys nach Figur 7 mit verstauter Haltedeichsel und weggenommener Batterie;
- Figur 9: eine perspektivische Ansicht wie Figur 8 des Trolleys in weiter gepacktem Zustand;
- Figur 10: eine perspektivische Ansicht des Trolleys nach Figur 9 in noch weiter gepacktem Zustand mit zurückgeklapptem Vorbau;
- Figur 11: eine Explosionsdarstellung von zwei je auf einer Seite des Trolleys angeordneten Stegplatten mit angebauten Halbwellen, Steckachsen und Untersetzungsgetrieben;
- Figur 12: eine perspektivische Unteransicht eines Trolleys gemäß der Erfindung mit Räderlaufwerk gemäß Figur 11 und auf der in Figur 12 vorderen Seite montierter Stegplatte in einer gepackten Konfiguration gemäß Figur 10, wobei die Stegplatte auf der in Figur 12 hinteren Seite noch mit Abstand von dem Trolley unmittelbar vor der Montage dargestellt ist;
- Figur 13: eine perspektivische Vorderansicht ähnlich Figur 10 eines Trolleys mit Gurtlaufwerk in teilweise gepackter Konfiguration, wobei das Gurtlaufwerk auf der vorderen Seite noch unmontiert und getrennt von dem Trolley dargestellt ist;
- Figur 14: eine perspektivische Unteransicht des Trolleys nach Figur 13;
- Figur 15: eine perspektivische Unteransicht gemäß der Figur 14, bei dem das Gurtlaufwerk auf der hinteren Seite in gepackter Stapelstellung und das vordere Gurtlaufwerk noch getrennt von dem Trolley unmittelbar vor dieser Stellung angeordnet sind;
- Figur 16: eine perspektivische Ansicht eines Trolleys mit Räderlaufwerk in gepackter Stapelstellung;

- Figur 17: eine perspektivische Ansicht wie Figur 16 eines Trolleys mit Gurtlaufwerk in gepackter Stapelstellung; und
- Figur 18: eine perspektivische Ansicht eines Behälters mit Abmessungen in mm zur Aufnahme eines gepackten Trolleys nach Figur 16 oder 17.

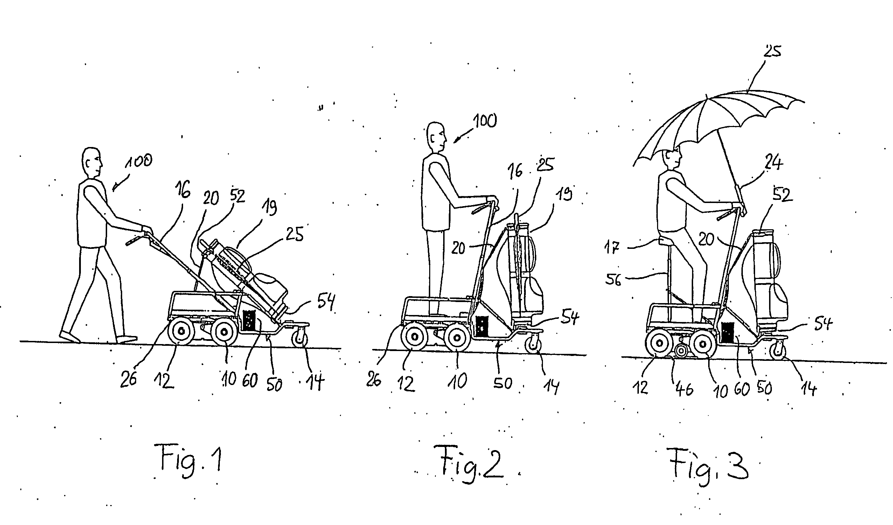

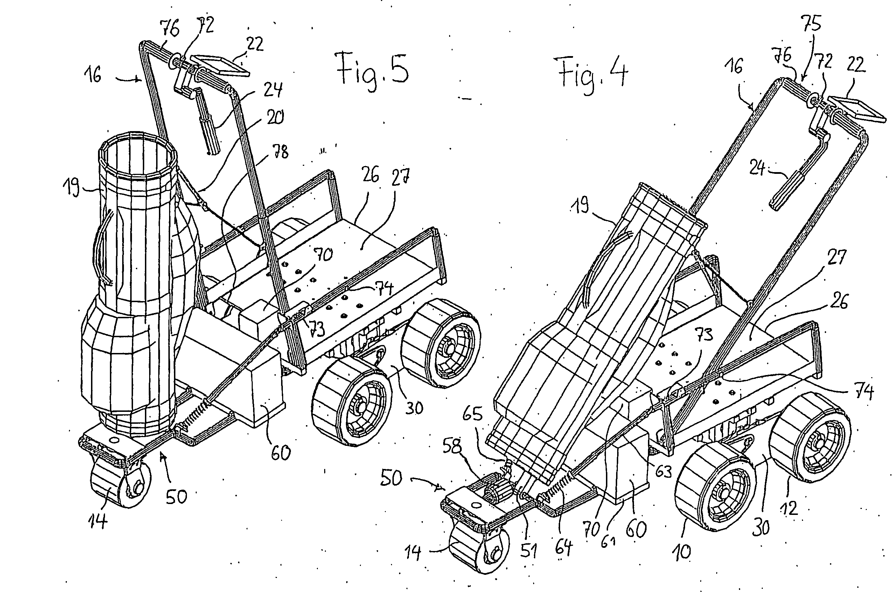

In den Figuren 1 und 4 einerseits und den Figuren 2 und 5 andererseits ist ein Golf-Trolley gemäß der Erfindung in zwei unterschiedlichen Nutzer-Situationen dargestellt.

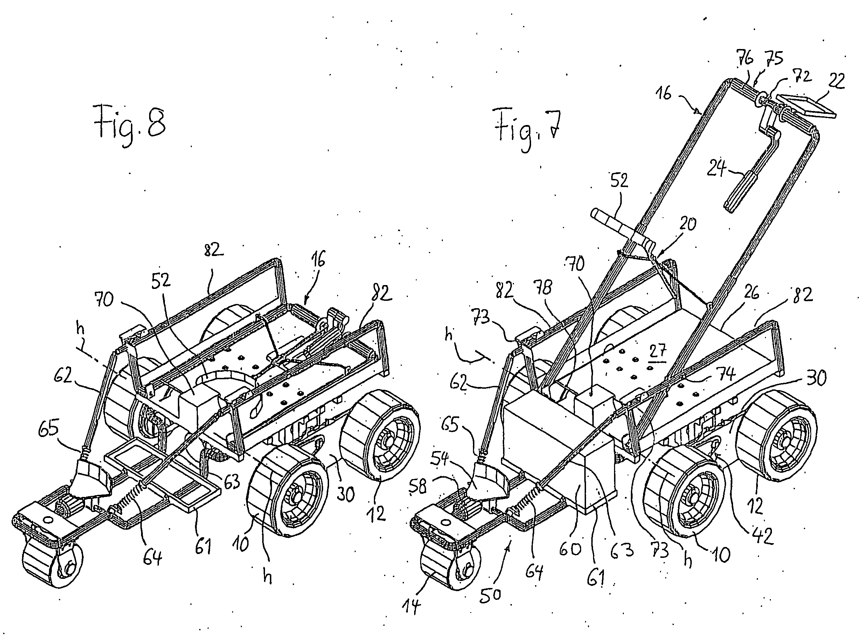

Der Trolley hat eine Grundplatte 26 aus Aluminium mit einem daran angebrachten Räderlaufwerk, das zwei axial fluchtende, antreibbare Räder 10 und, zwei ebenfalls axial fluchtende, frei laufende Rädern 12 sowie ein lenkbares Vorderrad 14 umfaßt. Die Grundplatte 26 bildet auf ihrer Oberseite einen Fahrerplatz 27. Am vorderen Ende der Grundplatte ist eine Haltedeichsel 16 um eine horizontale Achse h-h (Figuren 7, 8) schwenkbar angebracht. Ferner ist an diesem vorderen Ende ein Vorbau 50 über ein Gelenk 51 (Figur 4) angebracht, der das Vorderrad 14 sowie ein schwenkbares Bodenteil 54 einer Halteeinrichtung 20 für einen Golfsack 19 und einen Schirm 25 trägt. Die Halteeinrichtung hat einen Haltebügel 52 für das obere Ende des Golfsackes 19. Dieser Haltebügel 52 ist über eine Anlenkvorrichtung 20 mit der Haltedeichsel 16 gelenkig so verbunden, daß die Halteeinrichtung 52, 54 stets zusammen mit einem darauf befindlichen Golfsack und/oder Schirm 25 mitschwenkt.

Auf dem vorderen Ende der Grundplatte ist ein Steuerkasten 70 für den noch zu beschreibenden Elektroantrieb des Trolleys permanent befestigt. Der Vorbau 50 trägt auf einem entfembaren Tragrahmen 61 eine Batterie 60.

In den Figuren 1 und 4 ist eine erste, hintere Schwenkstellung der Haltedeichsel 16 dargestellt, die hier um etwa 45° bezüglich dem Untergrund nach hinten so geschwenkt ist, daß ein Golfspieler 100 die Haltedeichsel 16 an einem Griffbügel 75 mit Steuereinrichtungen, wie einem Beschleunigungs- und Bremsdrehgriff 76, einem Fahrtrichtungsstellknopf 72 und einem nicht gezeigten Ver- und Entriegelungsstellknopf für die Schwenkstellung der Haltedeichsel 16, greifen und zu Fuß hinter dem Trolley hergehen kann. Der Ver- und Entriegelungsknopf betätigt elektromagnetisch Deichselfeststell- und Lösestifte 73, 74 (Figuren 4, 5) je nach Bedarf. In der Nutzer-Situation gemäß Figur 1 und Figur 4 befindet sich der Deichselfeststell- und Lösestift 74 in Blockierstellung der Haltedeichsel 16.

In der Nutzer-Situation nach den Figuren 2 und 5 hat der Golfspieler 100 die Haltedeichsel 16 nach dem Entriegeln in eine vordere Schwenkstellung über die Senkrechte hinaus bis auf etwa 100° verschwenkt und in dieser Schwenkstellung mittels des Deichselfeststell- und Lösestiftes 73 arretiert. Gleichzeitig hat der Golfspieler 100 die Grundplatte 26 und damit den Fahrerplatz 27 bestiegen, so daß er stehend auf dem Trolley mitfährt.

Bei der Schwenkung der Haltedeichsel ist die Halteeinrichtung mit dem Haltebügel 52 und dem Bodenteil 54 dank der Anlenkvorrichtung 20 automatisch in eine Position geschwenkt, in welcher der Golfsack 19 etwa senkrecht auf dem Vorbau 50 stehend gehalten ist.

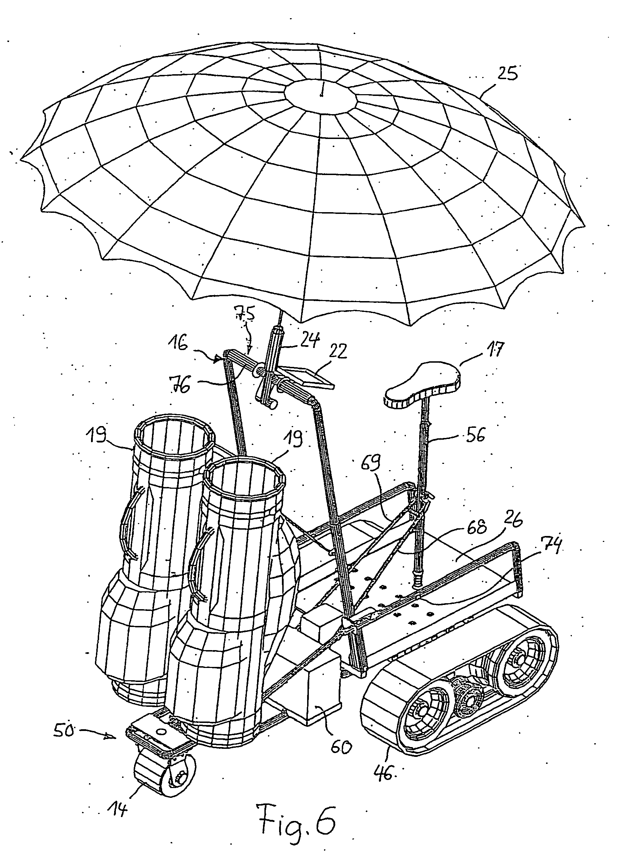

Die Figuren 3 und 6 zeigen eine alternative Ausführung eines Trolleys gemäß der Erfindung, wobei anstatt eines Räderlaufwerks ein Gurtlaufwerk mit je einem Laufgurt 46 auf jeder Seite des Trolleys vorgesehen ist. Die Laufgurte 46 umschlingen jeweils ein Paar aus einem angetriebenen Rad 10 und einem frei laufenden Rad 12. Das Gurtlaufwerk sorgt dafür, daß der Untergrund einer deutlich geringeren spezifischen Flächenbelastung ausgesetzt ist als durch die Raddruckbelastung des Räderlaufwerkes gemäß den Figuren 1 und 2 und als durch die Fußdruckbelastung eines Golfspidlers 100.

Vor Erreichen des zulässigen Belastungsdruckes des Untergrundes kann also ein Trolley mit einem Gurtlaufwerk gemäß den Figuren 3 und 6 höher belastet werden als ein Trolley gemäß den Figuren 1, 2, 4, 5.

Ein ebenfalls vorgesehenes Vorderrad 14 braucht in diesem Fall nicht lenkbar ausgelegt zu sein, weil das Gurtlaufwerk eine Lenkung nach Art eines Kettenfahrzeuges ermöglicht

Der Trolley nach den Figuren 3 und 6 unterscheidet sich weiterhin dadurch von demjenigen nach den Figuren 1 und 2, daß ein weiteres Bodenteil zur Aufnahme eines zweiten Golfsackes 19 am Vorbau 50 vorgesehen ist. Ferner ist ein Sitz 17 für den Golfspieler 100 vorgesehen, der über eine Teleskopstange auf der Grundplatte abstützbar ist. Die Teleskopstange 56, die mittels einer Feder 57 in Längsrichtung gefedert sein kann, und ist in ein Loch in der Grundplatte 26 einsteckbar. Ferner ist die Teleskopstange über ein daran anhakbares Gestänge mit zwei seitlichen Stangen 68, 69 stabil am vorderen Ende der Grundplatte 26 abgestützt.

Am Griffbügel 75 der Haltedeichsel 16 sind außer den erwähnten Steuereinrichtungen 72, 76 ein Score-Kartenhalter 22 sowie ein Schirmhalter 24 angebracht. In Figur 3 und 6 ist ein aufgespannter Schirm 25 in der Schinnhalterung 24 unterstützt gezeichnet.

Figur 3 zeigt einen Golfspieler 100 in einer dritten Nutzer-Situation, in der er auf dem Fahrerplatz 27 sitzend mitfährt.

In den Figuren 7 bis 10 sind in perspektivischen Darstellungen wie in den Figuren 4 und 5 vier unterschiedliche Aufbau- bzw. Verpackungsstellungen eines Trolleys gemäß den Figuren 1 und 2 dargestellt, aus denen weitere Einzelheiten des Trolleys ersichtlich sind.

Die Aufbaustellung gemäß Figur 7 entspricht derjenigen nach Figur 4, wobei jedoch der Golfschlägersack 19 weggelassen ist, so daß der Aufbau des Trolleys deutlicher wird. Die aus Teleskoprohren aufgebaute Haltedeichsel 16 ist mit ihren vorderen Enden an der Vorderseite der Grundplatte 26 um eine horizontale Querachse h-h schwenkbar angelenkt und, wie beschrieben, in zwei Schwenkstellungen mittels der Deichselfestell- und -lösestifte 73 beziehungsweise 74 an zwei Seitenrahmen 82 arretierbar, die ebenfalls in Rohrkonstruktion ausgeführt und an der Deckplatte 26 befestigt sind. Die oberen Streben der Seitenrahmen 82 sind schräg nach vom und unten durch zwei lösbare Stangen 62, 63 mit stoßdämpfenden Federn 64, 65 an ihren unteren Enden fortgesetzt, welche sich an dem ebenfalls in Rohrkonstruktion ausgeführten Vorbau 50 abstützen.

Sämtliche Rohre der Rohrkonstruktion sind in Leichtbauweise aus einem geeigneten Kunststoff, einem Leichtmetall, wie Aluminium, oder aus einem dünnwandigen, leichten Stahlrohr gefertigt und sind steckbar beziehungsweise klappbar.

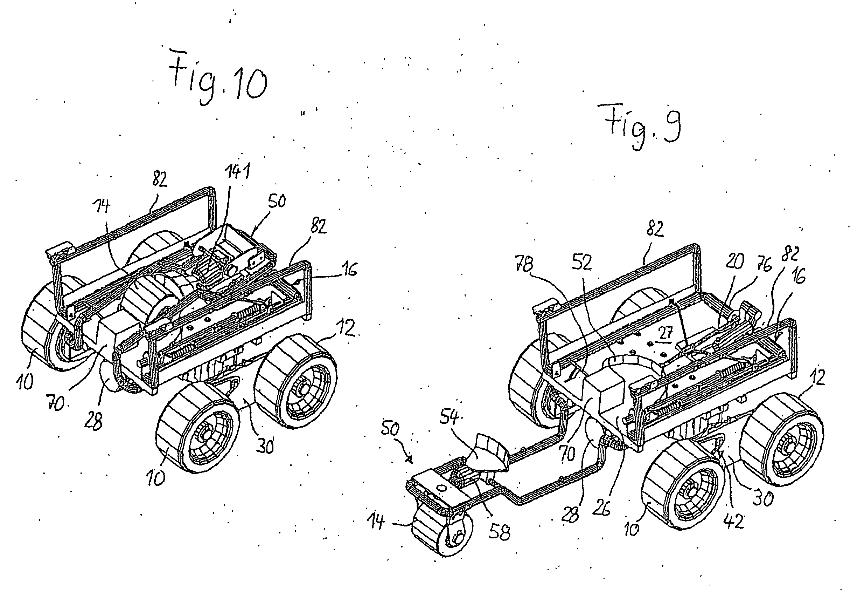

So sind die Stangen 62, 63 von dem Seitenrahmen 82 trennbar und auf der Grundplatte 26 mitsamt der stoßdämpfenden Federn 64, 65 verstaubar, wie dies in Figur 9 gezeigt ist. In dieser Figur sind bereits der Tragrahmen 61 und die Batterie 60 vom Vorbau entfernt.

Darauf wird ist der verbleibende gesamte Vorbau 50 um 180° um die Vorderkante der Grundplatte 26 und gegen diese verschwenkt, so daß das Vorderrad hinter dem an der Grundplatte 26 permanent befestigten Steuerkasten 70 zu liegen kommt. In dieser, in Figur 10 gezeigten Stellung ragen die beidseitigen Laufwerke mit den Radpaaren 10, 12 von der Grundplatte 26 noch nach unten weg.

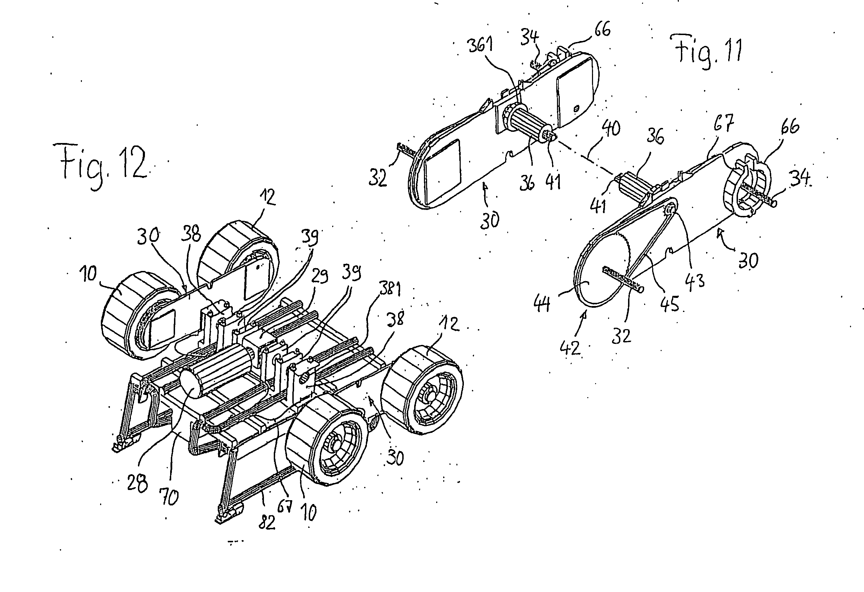

Anhand der Figuren 11 und 12 seien nun die Laufwerke und ihre Montage an den Trolleys beschrieben.

In der Figur 11 sind die wesentlichen Bestandteile des Laufwerkes gezeichnet, die für beide Varianten, nämlich das Räderlaufwerk gemäß den Figuren 1, 2, 4, 5 und das Gurtlaufwerk gemäß den Figuren 3 und 6, übereinstimmen. Jedes Laufwerk hat zwei spiegelbildliche Laufwerkseinheiten, die je einer Seite des Trolleys zugeordnet sind, mit identischen Bauelementen, nämlich einer Stegplatte 30, zwei im Längsabstand daran drehbar gelagerten Halbwellen 32, 34, die von der Stegplatte 30 nach außen ragen, und einer an der Innenseite der Stegplatte 30 mittig zwischen den beiden Halbwellen 32, 34 befestigten hohlen Steckachse 36, die von der Innenseite der Stegplatte 30 wegragt und von einer Antriebshalbwelle 41 durchsetzt ist, die von einem Getriebe 29 ausgeht und bis zur Außenseite der Stegplatte 30 durchgeführt ist. Auf dem äußeren Ende jeder Antriebswelle 41 sitzt ein Ritzel 43, welches Teil eines Untersetzungsgetriebes 42 mit Zahnriemen 45 und Zahnrad 44 bildet, das seinerseits mit der Halbwelle 32 umläuft. Auf dieser Halbwelle sitzt das antreibbare Rad 10 der Laufwerkseinheit. Auf der anderen Halbwelle 34 sitzt das frei laufende Rad 12. Auf dieses Rad wirkt eine ebenfalls auf der Außenseite der Stegplatte 30 angeordnete Feststellbremse 66, welche über ein Bremsseil 67 mittels des Bremspedales 68 (Figuren 4, 7) betätigbar ist.

Wie die Figur 12 zeigt, ist jede Steckachse 36 in eine Lageröffnung 381 eines Lagerklotzes 38 einsteckbar und darin schwenkbar gelagert. Lagerböcke 39 dienen zur Lagerung der Antriebshalbwellen 41. Die Lagerklötze 38 und die Lagerböcke 39 bilden Teile der Grundplatte 26 und stehen von deren Unterseite nach unten weg. Ein drehrichtungsumkehrbarer Elektromotor 28 treibt die beiden Antriebshalbwellen 41 über ein Differentialgetriebe 29 an.

Eine Alternative hierzu ist aus den Figuren 14 und 15 ersichtlich, bei denen statt eines Räderlaufwerkes ein Gurtlaufwerk eingesetzt ist. Der Grundaufbau des Gurtlaufwerkes ist identisch mit demjenigen nach Figur 11. Unterschiedlich ist, daß die Räder 10, 12 jeder anhand der in Figur 11 beschriebenen Laufwerkseinheit einem Laufgurt 46 aus einem widerstandsfähigen, gummielastischen Werkstoff umschlungen sind. Ferner ist für jede Laufwerkseinheit ein eigener Antriebsmotor 281, 282 vorgesehen, der seine Laufwerkseinheit über ein eigenes Winkelgetriebe 291, 292 antreibt. Außerdem besitzt jede Laufwerkseinheit zusätzlich noch ein zwischen den Rädern 10 und 12 befindliches Laufrad 47 zur Führung des Laufgurtes 46.

Selbstverständlich können die Räder 10, 12 des Gurtlaufwerkes so ausgebildet sein, daß nur minimaler Schlupf zwischen ihnen und dem Laufgurt 46 auftritt. Zur Beeinflussung des Reibkoeffizienten kann dies durch entsprechende Werkstoffauswahl für den Laufgurt 46 und die Räder 10, 12 erreicht werden oder auch durch eine polygonale Ausbildung der Räder 10, 12. Wenn ein Kettentrieb gewählt wird, sind die Räder 10, 12 als Kettenräder auszubilden, und die dann den Laufgurt 46 ersetzende Kette ist zur Schonung des Untergrundes bevorzugt mit Kettengliedern aus einem gummielastischen Material ausgerüstet.

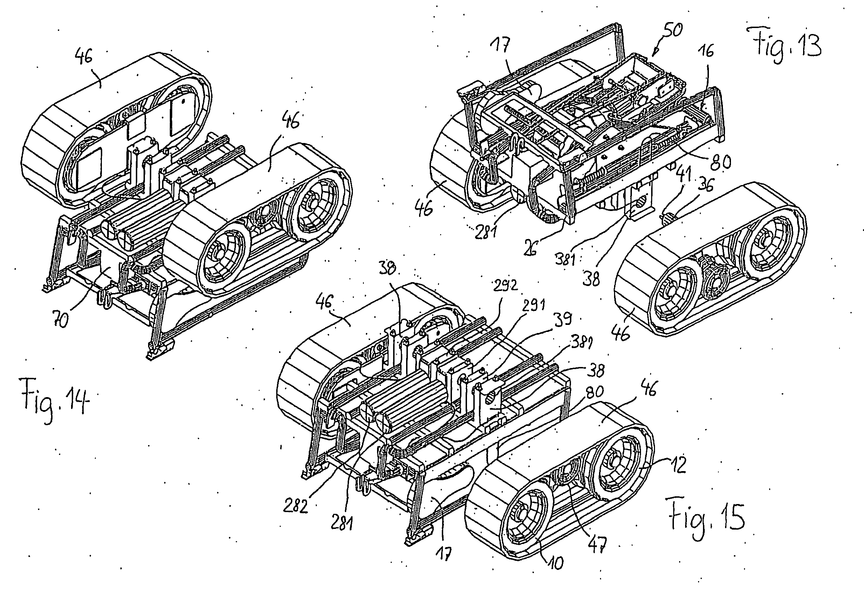

In den Figuren 13 und 15 ist jeweils eine Laufwerkseinheit des Gurtlaufwerkes von einer Trolleyseite entfernt gezeichnet. In montiertem Zustand ist jede Laufwerkseinheit mittels einer U-Klammer (Figuren 13 und 15) an der Grundplatte 26 mit Anbauten gehaltert, die wie gezeigt, Bohrungen neben dem Lagerklotz 38 durchsetzt und hinter einen Ringflansch 361 an der betreffenden Schwenkachse 36 greift.

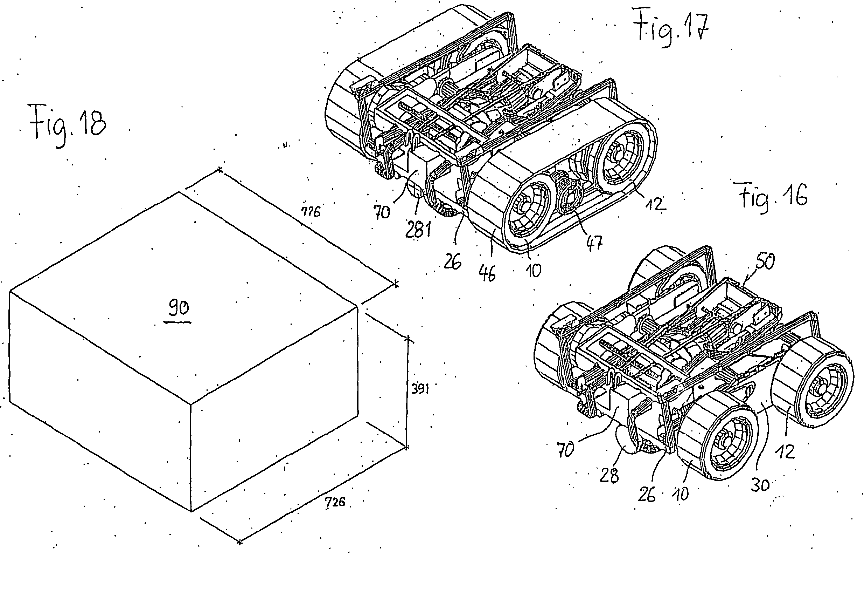

Um die endgültige Verpackungsstellung gemäß den Figuren 16, 17 zu erreichen, werden die beiden seitlichen Laufwerkseinheiten nach Entfernen der U-Klammer seitlich von den Trolleys abgezogen und in die Verstaustellung gemäß Figur 16 und 17 gebracht, in denen die Steckachsen in einen Leerraum oberhalb der Grundplatte 26 hineinragen. Somit wird die Verstauhöhe auf ein Maß von beispielsweise 391 mm (Figur 8) verkleinert.

In der Figur 18 ist mit 90 ein virtuelles Behältnis dargestellt, dessen drei Grundabmessungen die Außenmaße der Trolleys mit Räderlaufwerk (Figur 16) und mit Gurtlaufwerk gemäß Figur 17 umschreiben, zum Beispiel 776, 726 und 391 mm. Ein Reisekoffer mit diesen oder ähnlichen Innenmaßen macht den Trolley gemäß der Erfindung leicht transportierbar und ohne weiteres im Kofferraum eines PkW verstaubar.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Trolley mit einem motorisch antreibbaren Laufwerk (10; 46), mindestens einem Vorderrad, einer Halteeinrichtung (18) für mindestens einen Gepäcksack (19) oder dergleichen, einem Fahrerplatz (27), wobei die Halteeinrichtung (52, 54) für den Gepäcksack (19) vor dem Fahrerplatz (27) angeordnet ist und der Fahrerplatz für einen Nutzer von hinten oder von beiden Seiten frei zugänglich ist, und einer Haltedeichsel (16) zum Führen des Trolleys durch den Nutzer (100) entweder vom Fahrerplatz (27) aus oder von außerhalb, welche Haltedeichsel (16) zwischen einer hinteren Stellung, in welche der Nutzer (100) die Haltedeichsel (16) hinter dem Trolley zu Fuß gehend hält, und einer vorderen Stellung verschwenkbar ist, in welcher der Nutzer (100) den Fahrerplatz (27) auf dem Trolley eingenommen hat, **dadurch gekennzeichnet, daß** eine an der Haltedeichsel (16) für die Halteeinrichtung vorgesehene Anlenkvorrichtung (20) so ausgebildet ist, daß sie ein Mitschwenken der Halteeinrichtung beim Verschwenken der Haltedeichsel verursacht.

2. Trolley nach Anspruch 1, **dadurch gekennzeichnet, daß** Einrichtungen (72-78) zu Steuern eines Antriebs (28; 281, 282) für das Laufwerk (10; 46) sowie einer Lenkeinrichtung (58) vorgesehen sind.

3. Trolley nach Anspruch 1 oder 2, **dadurch gekennzeichnet, daß** an der Haltedeichsel (16) ein Kartenhalter (22) sowie ein Schinnhalter (24) lösbar angebracht sind.

4. Trolley nach einem der Ansprüche 1 bis 3, **dadurch gekennzeichnet, daß** die Haltedeichsel (16) in Schwenkrichtung stoßgedämpft ist.

5. Trolley nach einem der vorangehenden Ansprüche, **dadurch gekennzeichnet, daß** das Laufwerk zwei axial fluchtende, antreibbare Räder (10) und zwei weitere, frei laufende, ebenfalls axial fluchtend angeordnete Räder (12) parallel zu und im Abstand von den antreibbaren Rädern (10) umfaßt, so daß auf jeder Seite des Trolleys ein Radpaar aus einem frei laufenden und einem angetriebenen Rad vorgesehen ist, die in Längsrichtung des Trolleys mit Abstand angeordnet sind.

6. Trolley nach Anspruch 5, **dadurch gekennzeichnet, daß** die antreibbaren Räder (10) und die weiteren Räder (12) an einer den Fahrerplatz (27) aufweisenden Grundplatte (26) angebracht sind, an welcher die Haltedeichsel (19) schwenkbar und arretierbar in den beiden genannten Stellungen angelenkt ist.

7. Trolley nach Anspruch 6, **dadurch gekennzeichnet, daß** die Grundplatte (26) einen Elektromotor (28) des Elektroantriebs trägt, dessen Abtrieb auf die antreibbaren Räder (10) über ein Getriebe (42) einwirkt oder daß jedem antreibbaren Rad (10) ein eigener Elektromotor (281, 282) zugeordnet ist und diese beiden Elektromotoren ebenfalls an der Grundplatte (26) abgestützt sind

8. Trolley nach Anspruch 7, **dadurch gekennzeichnet, daß** jeweils die beiden Räder (10, 12) jedes Radpaares einer Trolleyseite auf Halbwellen (32, 34) sitzen, die parallel zueinander in einer gemeinsamen Stegplatte (30) drehbar gelagert sind, daß jede Stegplatte sich in Längsrichtung der Grundplatte (26) erstreckt und eine streckbare, hohle Schwenkachse (36) trägt, welche in einen ungefähr in Längsmitte der Grundplatte (26) angeordneten Lagerklotz (38) einsteckbar und darin schwenkbar gelagert ist, daß die beiden Lagerklötze (38) und Schwenkachsen (36) eine in Querrichtung der Grundplatte verlaufende, gemeinsame horizontale Querachse (40) haben und unabhängiges Schwenken der Stegplatten (30) um die horizontale Querachse ermöglichen, und daß durch jede hohle Schwenkachse (36) eine von dem oder einem Elektromotor (28 oder 281, 282) getriebene Antriebshalbwelle (41) zur Stegplatte (30) durchgeführt ist und ein daran angeordnetes Untersetzungsgetriebe (42) antreibt, dessen Abtrieb auf eines der antreibbaren Räder (10) wirkt.

9. Trolley nach Anspruch 8, **dadurch gekennzeichnet, daß** jedes Untersetzungsgetriebe (42) ein Zahnradgetriebe oder ein Zahnriementrieb ist.

10. Trolley nach einem der Ansprüche 5 bis 8, **dadurch gekennzeichnet, daß** die Räder (10, 12, 14) aus Vollgummi bestehen oder luftbereift sind.

11. Trolley nach einem der Ansprüche 1 bis 10, **dadurch gekennzeichnet, daß** das Vorderrad (14) mechanisch oder mittels eines Servomotors (58) lenkbar ist.

12. Trolley nach einem der Ansprüche 5 bis 9, **dadurch gekennzeichnet, daß** jedes Radpaar aus einem frei laufenden und einem angetriebenen Rad (10, 12) von einem Laufgurt (46) oder einer Kette umschlossen ist und daß jedem Laufgurt ein eigener, unabhängig von dem anderen betreibbarer Elektromotor (281, 282) zugeordnet ist, um eine Antriebs- und Lenkfunktion nach Art eines Kettenfahrzeuges zu realisieren.

13. Trolley nach Anspruch 12, **dadurch gekennzeichnet, daß** der Laufgurt (46) oder die Kettenglieder der Kette aus einem gummielastischen Werkstoff bestehen.

14. Trolley nach einem der Ansprüche 6 bis 13, **dadurch gekennzeichnet, daß** an der Grundplatte (26) über ein Gelenk (51) ein das Vorderrad (14) abstützender Vorbau (50) angebracht ist, der ein Bodenteil (54) der Halteeinrichtung sowie eine Batterie (60) zur Energieversorgung des oder jedes Elektromotors (28; 281, 282) trägt und daß ein Haltebügel (52) der Halteeinrichtung an der Haltedeichsel (16) schwenkbar angelenkt ist.

15. Trolley nach Anspruch 14, **dadurch gekennzeichnet, daß** zwischen der Haltedeichsel (16) und dem Vorbau (50) ein Gestänge (62, 63) enthaltend mindestens einen Stoßdämpfer (64, 65) angeordnet ist.

16. Trolley nach einem der Ansprüche 7 bis 15, **dadurch gekennzeichnet, daß** der oder jeder Elektromotor (28; 281, 282) eine Motorbremse aufweist.

17. Trolley nach einem der Ansprüche 5 bis 16, **dadurch gekennzeichnet, daß** den frei laufenden Rädern (12) eine insbesondere mechanische Festellbremse (66) zugeordnet ist.

18. Trolley nach einem der Ansprüche 6 bis 17, **dadurch gekennzeichnet, daß** ein vorzugsweise gefederter Sitz (17) über eine Teleskopstange (56) in die Grundplatte (26) einsteckbar und mittels eines Sitzgestänges (68, 69) abstützbar ist.

19. Trolley nach einem der Ansprüche 1 bis 18, **dadurch gekennzeichnet, daß** der Trolley in Leichtbauweise ausgeführte, modulare Bauteile hat, die aus steck- und faltbaren Elementen bestehen, welche ein Zusammenpacken zu einem leicht transportablen Paket mit kleinen, in den Kofferraum eines üblichen Pkw passenden Abmessungen gestatten.

20. Golf-Trolley mit den Merkmalen eines der vorangehenden Ansprüche.

## Claims

1. Trolley with a motor drivable running gear (10; 46), at least one front wheel, a holding device (18) for at least one luggage bag (19) or the like, a driver's position (27), in which the holding device (52, 54) for the luggage bag (19) is positioned in front of the driver's position (27) and the latter is freely accessible from the rear or both sides for a user, and a holding bar (16) for the guidance of the trolley by the user (100) either from the driver's position (27) or from outside the same, said holding bar (16) being pivotable between a rear position, in which the user (100) holds said bar (16) walking behind the trolley, and a front position in which the user (100) has assumed the driver's position (27) on the trolley, **characterized in that** an articulation device (20) provided for the holding device on the holding bar (16) is constructed in such a way that there is a joint pivoting of the holding device on pivoting the holding bar.

2. Trolley according to claim 1, **characterized in that** there are device (72-78) for controlling a drive (28; 281, 282) for the running gear (10; 46), as well as a steering device (58).

3. Trolley according to claim 1 or 2, **characterized in that** a card holder (22) and an umbrella or parasol holder (24) are detachably fitted to the holding bar (16).

4. Trolley according to one of the claim 1 to 3, **characterized in that** the holding bar (16) is shock-absorbed in the pivoting direction.

5. Trolley according to one of the preceding claims, **characterized in that** the running gear has two axially aligned, drivable wheels (10) and two further, freely running and also axially aligned wheels (12) parallel thereto and which are spaced from the drivable wheels (10), so that on each side of the trolley is provided a wheel pair constituted by a freely running wheel and a driven wheel, which are spaced in the trolley longitudinal direction.

6. Trolley according to claim 5, **characterized in that** the drivable wheels (10) and the further wheels (12) are fitted to a base plate (26) having the driver's position (27) and on which the holding bar (19) is articulated in a pivotable and lockable manner in the two aforementioned positions.

7. Trolley according to claim 6, **characterized in that** the base plate (26) carries an electric motor (28) of the electric drive, whose driven side acts by means of a transmission (42) on the drivable wheels (10) and that with each drivable wheel (10) is associated its own electric motor (281, 282) and said two electric motors are also supported on the base plate (26).

8. Trolley according to claim 7, **characterized in that** each of the two wheels (10, 12) of each wheel pair on one trolley side are mounted on half-shafts (32, 34), which are mounted in rotary manner parallel to one another in a common web plate (30), that each web plate extends in the longitudinal direction of the base plate (36) and carries an extensible, hollow pivot pin (36), which can be inserted in a bearing block (38) located roughly in the longitudinal centre of the base plate (26) and is pivotably mounted therein, that the two bearing blocks (38) and pivot pin (36) have a common, horizontal transverse axis (40) in the transverse direction of the base plate and allowing an independent pivoting of the web plates (30) about the horizontal transverse axis, and that through each hollow pivot pin (36) is passed to web plate (30) a drive half-shaft (41) driven by the or an electric motor (28 or 281, 282) and drives a reduction gear (42) located thereon and whose driven side acts on one of the drivable wheels (10).

9. Trolley according to claim 8, **characterized in that** each reduction gear (42) is a gear drive or a timing belt drive.

10. Trolley according to one of the claims 5 to 8, **characterized in that** the wheels (10, 12, 14) are made from solid rubber or have pneumatic tyres.

11. Trolley according to one of the claims 1 to 10, **characterized in that** the front wheel (14) is steerable mechanically or by means of a servomotor (58).

12. Trolley according to one of the claims 5 to 9, **characterized in that** each wheel pair comprising a freely running and a driven wheel (10, 12) is surrounded by a running belt (46) or a chain and that with each running belt is associated its own electric motor (281, 282) drivable independently of the other one in order to implement a driving and steering function in the manner of a tracked vehicle.

13. Trolley according to claim 12, **characterized in that** the running belt (46) or chain links are made from a rubber-like material.

14. Trolley according to one of the claims 6 to 13, **characterized in that** to the base plate (56) is fitted a projecting part (50) supporting the front wheel (14) by means of a joint and which carries a bottom part (54) of the holding device as well as a battery (60) for the power supply of the or each electric motor (28; 281, 282) and that a retaining clip (52) of the holding device is pivotably articulated to the holding bar (16).

15. Trolley according to claim 14, **characterized in that** a linkage (62, 63) containing at least one shock absorber (64, 65) is positioned between the holding bar (16) and the projecting part (50).

16. Trolley according to one of the claims 7 to 15, **characterized in that** the or each electric motor (28; 281, 282) has a motor-driven brake.

17. Trolley according to one of the claims 5 to 16, **characterized in that** with the freely running wheels (12) is associated an in particular mechanical parking brake (66).

18. Trolley according to one of the claims 6 to 17, **characterized in that** a preferably sprung seat (17) can be inserted by means of a telescopic rod (56) into the base plate (26) and can be supported by means of a seat linkage (68, 69).

19. Trolley according to one of the claims 1 to 18, **characterized in that** the trolley has lightweight, modular components comprising insertable and foldable elements, which allow a packing together to form an easily transportable package with small dimensions fitting into the trunk or boot of a standard car.

20. Golf trolley having the features of one of the preceding claims.

## Revendications

1. Chariot avec un mécanisme d'entraînement motorisé (10; 46), au moins une roue avant, un dispositif de retenue (18) pour au moins un sac de bagage (19) ou analogue, un emplacement de conducteur (27), dans lequel le dispositif de retenue (52, 54) pour le sac de bagage (19) est disposé devant l'emplacement de conducteur (27) et l'emplacement de conducteur est librement accessible pour un utilisateur par l'arrière ou par les deux côtés, et un timon (16) pour le guidage du chariot par l'utilisateur (100) soit à partir de l'emplacement de conducteur (27) soit de l'extérieur, timon (16) qui peut pivoter entre une position arrière, dans laquelle l'utilisateur (100) tient le timon (16) derrière le chariot en se déplaçant à pied, et une position avant, dans laquelle l'utilisateur (100) a occupé l'emplacement de conducteur (27) sur le chariot, **caractérisé en ce qu'**un dispositif articulé (20) prévu sur le timon (16) pour le dispositif de retenue est réalisé de telle façon qu'il provoque un pivotement simultané du dispositif de retenue lors du pivotement du timon.

2. Chariot selon la revendication 1, **caractérisé en ce qu'**il est prévu des dispositifs (72-78) pour la commande d'un entraînement (28; 281, 282) pour le mécanisme d'entraînement (10; 46) ainsi que d'un dispositif de direction (58).

3. Chariot selon la revendication 1 ou 2, **caractérisé en ce qu'**un porte-carte (22) ainsi qu'un support de parapluie (24) sont fixés de manière démontable sur le timon (16).

4. Chariot selon l'une quelconque des revendications 1 à 3, **caractérisé en ce que** le timon (16) est amorti contre les chocs dans la direction de pivotement.

5. Chariot selon l'une quelconque des revendications précédentes, **caractérisé en ce que** le mécanisme d'entraînement comprend deux roues pouvant être entraînées (10), alignées axialement, et deux autres roues tournant librement (12), également alignées axialement et disposées parallèlement et à distance des roues pouvant être entraînées (10), de telle façon qu'il soit prévu de chaque côté du chariot une paire de roues composée d'une roue tournant librement et d'une roue entraînée, qui sont disposées à distance l'une de l'autre dans la direction longitudinale du chariot.

6. Chariot selon la revendication 5, **caractérisé en ce que** les roues pouvant être entraînées (10) et les autres roues (12) sont installées sur une plaque de base (26) présentant l'emplacement de conducteur (27), sur laquelle le timon (16) est articulé de façon à pouvoir pivoter et être calé dans les deux positions précitées.

7. Chariot selon la revendication 6, **caractérisé en ce que** la plaque de base (26) porte un moteur électrique (28) de l'entraînement électrique, dont la sortie agit sur les roues pouvant être entraînées (10) par l'intermédiaire d'une transmission (42) ou **en ce qu'**un moteur électrique individuel (281, 282) est associé à chaque roue pouvant être entraînée (10) et ces deux moteurs électriques sont également supportés par la plaque de base (26).

8. Chariot selon la revendication 7, **caractérisé en ce que** les deux roues (10, 12) de chaque paire de roues d'un côté du chariot sont montées respectivement sur des demi-arbres (32, 34), qui sont montés de façon rotative parallèlement l'un à l'autre dans une plaque de joue commune (30), **en ce que** chaque plaque de joue s'étend dans la direction longitudinale de la plaque de base (26) et porte un axe pivotant creux extensible (36), qui peut être engagé dans un bloc de support (38) disposé environ au milieu longitudinal de la plaque de base (26) et y est supporté de façon pivotante, **en ce que** les deux blocs de support (38) et les deux axes pivotants (36) présentent un axe transversal horizontal commun (40), orienté dans la direction transversale de la plaque de base (26), et permettent un pivotement indépendant des plaques de joue (30) autour de l'axe transversal horizontal, et **en ce qu'**un demi-arbre d'entraînement (41) entraîné par le ou un moteur électrique (28 ou 281, 282) est inséré à travers chaque axe pivotant creux (36) jusqu'à la plaque de joue (30) et entraîne un réducteur de vitesse (42) disposé sur celle-ci, dont la sortie agit sur une des roues pouvant être entraînées (10).

9. Chariot selon la revendication 8, **caractérisé en ce que** chaque réducteur de vitesse (42) est une transmission par engrenages ou un entraînement par courroie crantée.

10. Chariot selon l'une quelconque des revendications 5 à 8, **caractérisé en ce que** les roues (10, 12, 14) se composent de caoutchouc plein ou sont garnies de pneumatiques.

11. Chariot selon l'une quelconque des revendications 1 à 10, **caractérisé en ce que** la roue avant (14) est orientable mécaniquement ou au moyen d'un servomoteur (58).

12. Chariot selon l'une quelconque des revendications 5 à 9, **caractérisé en ce que** chaque paire de roues composée d'une roue tournant librement et d'une roue entraînée (10, 12) est entourée par une bande roulante (46) ou par une chenille et **en ce qu'**un moteur électrique individuel (281, 282), pouvant être actionné indépendamment de l'autre, est associé à chaque bande roulante, afin de réaliser une fonction d'entraînement et de direction à la manière d'un véhicule à chenilles.

13. Chariot selon la revendication 12, **caractérisé en ce que** la bande roulante (46) ou les maillons de la chenille est/sont constitué(e)s d'un matériau de caoutchouc élastique.

14. Chariot selon l'une quelconque des revendications 6 à 13, **caractérisé en ce qu'**une structure avancée (50) supportant la roue avant (14) est montée sur la plaque de base (26) par l'intermédiaire d'une articulation (51), structure qui porte une partie inférieure (54) du dispositif de retenue ainsi qu'une batterie (60) pour l'alimentation en énergie du ou de chaque moteur électrique (28; 281, 282) et **en ce qu'**un étrier de retenue (52) du dispositif de retenue est articulé de façon pivotante sur le timon (16).

15. Chariot selon la revendication 14, **caractérisé en ce qu'**une barre (62, 63) comprenant au moins un amortisseur de chocs (64, 65) est disposée entre le timon (16) et la structure avancée (50).

16. Chariot selon l'une quelconque des revendications 7 à 15, **caractérisé en ce que** le ou chaque moteur électrique (28; 281, 282) comporte un frein moteur.

17. Chariot selon l'une quelconque des revendications 5 à 16, **caractérisé en ce qu'**un frein de stationnement (66), en particulier mécanique, est associé aux roues tournant librement (12).

18. Chariot selon l'une quelconque des revendications 6 à 17, **caractérisé en ce qu'**un siège (17), de préférence suspendu, peut être engagé dans la plaque de base (26) par l'intermédiaire d'une barre télescopique (56) et peut être soutenu par une barre de siège (68, 69).

19. Chariot selon l'une quelconque des revendications 1 à 18, **caractérisé en ce que** le chariot comporte des composants modulaires, de construction légère, qui se composent d'éléments enfichables et repliables, qui permettent de le replier en un paquet aisément transportable avec de petites dimensions s'adaptant dans le coffre à bagages d'un véhicule automobile usuel.

20. Chariot de golf présentant les caractéristiques d'une des revendications précédentes.
